# EUROPÄISCHE PATENTANMELDUNG

(11) **EP 4 275 942 A1**
(43) Veröffentlichungstag der Anmeldung: **15.11.2023**
(21) Anmeldenummer: 22305693.8
(22) Anmeldetag: 10.05.2022
(51) Int. Cl.: B60L 3/00, B60L 13/03, B60L 15/00, H02K 16/02, H02K 41/03, B65G 54/02, B61L 23/14, B61L 25/02

(54) **VERFAHREN ZUM BETREIBEN EINES TRANSPORTSYSTEMS SOWIE TRANSPORTSYSTEM**

(71) Anmelder: Schneider Electric Industries SAS, 92500 Rueil-Malmaison (FR)
(72) Erfinder: Hofmann, Steffen, 97854 Steinfeld (DE); Heid, Jürgen, 97237 Altertheim (DE)
(74) Vertreter: Manitz Finsterwald Patent- und Rechtsanwaltspartnerschaft mbB

(57) **Zusammenfassung**

Ein Verfahren zum Betreiben eines Transportsystems (10), insbesondere eines Multi-Carrier-Systems, das mehrere Linearmotoren (11), welche aneinandergereiht angeordnet sind und eine Führungsbahn (13) aufweisen, und mehrere Transportelemente (15,17,19) umfasst, welche mittels der Linearmotoren (11) entlang der Führungsbahn (13) bewegbar sind, weist die folgenden Schritte auf:
- Erzeugen eines Fahrauftrags für ein erstes (15) der Transportelemente (15,17,19) zum Fahren entlang zumindest eines Teilabschnitts der Führungsbahn (13),
- Erzeugen eines ersten Bewegungsprofils des ersten Transportelements (15) für den Fahrauftrag basierend auf vorbestimmten Bewegungskennwerten,
- Abgleichen des ersten Bewegungsprofils mit einem zweiten Bewegungsprofil eines zweiten Transportelements (17) unmittelbar vor dem ersten Transportelement (15) und ermitteln, ob bei Durchführung des Fahrauftrags ein vorbestimmter Mindestabstand zwischen dem ersten Transportelement (15) und dem zweiten Transportelement (17) unterschritten wird,
- Aktualisieren des ersten Bewegungsprofils, um den Mindestabstand zu wahren, falls festgestellt wurde, dass der Mindestabstand unterschritten wird, und
- Ansteuern der Linearmotoren (11), um das erste Transportelement (15) entsprechend dem ersten Bewegungsprofil zu bewegen.

## Beschreibung

Die Erfindung betrifft ein Verfahren zum Betreiben eines Transportsystems, insbesondere eines Multi-Carrier-Systems, das mehrere Linearmotoren, welche aneinandergereiht angeordnet sind und eine Führungsbahn aufweisen, und mehrere Transportelemente umfasst, welche mittels der Linearmotoren entlang der Führungsbahn bewegbar sind.

Eine Herausforderung beim Betrieb eines solchen Transportsystems ist regelmäßig die Vermeidung von Kollisionen der Transportelemente miteinander, und zwar insbesondere dann, wenn eine große Anzahl von Transportelementen entlang der Führungsbahn bewegt wird. Um die Kapazität des Transportsystems zu erhöhen, sollen die Transportelemente mit einer möglichst hohen Geschwindigkeit entlang der Führungsbahn bewegt werden. Allerdings ist bei einer hohen Geschwindigkeit andererseits auch das Risiko von Kollisionen erhöht.

Beispielsweise können Transportelemente von einer Steuereinheit des Transportsystems Anweisungen erhalten, an eine bestimmte Zielposition entlang der Führungsbahn zu fahren. Wenn diese Zielposition jedoch bereits von einem oder mehreren anderen Transportelementen blockiert ist, muss das Transportelement zunächst in eine Warteposition gefahren werden, die abhängig ist von der Anzahl der Transportelemente, die in der Zielposition sind, dem erforderlichen Abstand zum vorausfahrenden Transportelement sowie ggfs. der Größe eines Produkts, das von dem Transportelement transportiert wird. Sodann muss die Position wiederholt berechnet werden, bis die Zielposition von den anderen Transportelementen freigegeben wurde und das Transportelement in die Zielposition aufrücken kann.

Zudem kann es vorkommen, dass vorausfahrende Transportelemente langsamer bewegt werden. Dann muss verhindert werden, dass das nachfolgende Transportelement auf das vorausfahrende Transportelement auffährt. Auch Änderungen der Geschwindigkeit des vorausfahrenden Transportelements müssen dabei überwacht werden, um ein Auffahren zu vermeiden.

Herkömmliche Lösungen sehen in der Regel vor, dass eine zentrale Steuerung genutzt wird, die die Abstände der Transportelemente in der Regel zyklisch überwacht. Bei einer drohenden Kollision zweier Transportelemente werden zur Vermeidung dieser Kollision alle Transportelemente des Transportsystems angehalten. Danach ist ein aufwändiger Neustart aller Transportelemente nötig, bei dem die gesamte Anlage für eine bestimmte Zeit außer Betrieb ist und Produktionslinien angehalten werden müssen.

Es ist eine Aufgabe der vorliegenden Erfindung, ein Verfahren zum Betreiben eines Transportsystems und ein Transportsystem mit einer verbesserten Vermeidung von Zusammenstößen oder Abstandsunterschreitungen vorzuschlagen.

Diese Aufgabe wird durch den Gegenstand der unabhängigen Ansprüche gelöst. Vorteilhafte Ausgestaltungen sind Gegenstand der Unteransprüche und ergeben sich aus der Beschreibung und den Zeichnungen.

Das erfindungsgemäße Verfahren dient zum Betreiben eines Transportsystems, insbesondere eines Multi-Carrier-Systems, das mehrere Linearmotoren, welche aneinandergereiht angeordnet sind und eine Führungsbahn aufweisen, und mehrere Transportelemente umfasst, welche mittels der Linearmotoren entlang der Führungsbahn bewegbar sind. Das Verfahren weist die folgenden Schritte auf:
- Erzeugen eines Fahrauftrags für ein erstes der Transportelemente zum Fahren entlang zumindest eines Teilabschnitts der Führungsbahn,
- Erzeugen eines ersten Bewegungsprofils des ersten Transportelements für den Fahrauftrag basierend auf vorbestimmten Bewegungskennwerten,
- Abgleichen des ersten Bewegungsprofils mit einem zweiten Bewegungsprofil eines zweiten Transportelements unmittelbar vor dem ersten Transportelement und ermitteln, ob bei Durchführung des Fahrauftrags ein vorbestimmter Mindestabstand zwischen dem ersten Transportelement und dem zweiten Transportelement unterschritten wird,

- Aktualisieren des ersten Bewegungsprofils, um den Mindestabstand zu wahren, falls festgestellt wurde, dass der Mindestabstand unterschritten wird, und
- Ansteuern der Linearmotoren, um das erste Transportelement entsprechend dem ersten Bewegungsprofil zu bewegen.

Das Bewegungsprofil von Transportelementen schließt in der Regel zumindest den Verlauf der Position entlang der Führungsbahn über der Zeit ein, sodass genau ermittelt werden kann, zu welchem Zeitpunkt sich das Transportelement an welcher Position entlang des Teilabschnitts befinden wird. Um den Positionsverlauf berechnen zu können, werden außerdem der Verlauf der Geschwindigkeit, der Beschleunigung und des Rucks über der Zeit betrachtet. Als "Ruck" wird dabei die zeitliche Änderungsrate der Beschleunigung bezeichnet. Der Betreiber des Transportsystems hat insbesondere die Möglichkeit, bestimmte Grenzwerte vorzugeben. Beispielsweise können für jedes Transportelement und/oder für unterschiedliche Streckenabschnitte Grenzwerte für Geschwindigkeit, Beschleunigung und Ruck vorgegeben werden. So kann es etwa geboten sein, die Geschwindigkeit eines Transportelements in einem Kurvenbereich der Führungsbahn zu verringern, um zu vermeiden, dass das Transportelement von der Führungsbahn abkommt oder die beförderte Last verliert.

Das zweite Transportelement ist das Transportelement, welches sich entlang der Führungsbahn unmittelbar vor dem ersten Transportelement befindet oder unmittelbar vor dem ersten Transportelement fährt, wobei "unmittelbar" bedeutet, dass sich kein weiteres Transportelement zwischen dem ersten und dem zweiten Transportelement befindet oder zwischen diesen fährt.

Beim Abgleichen des ersten Bewegungsprofils mit dem zweiten Bewegungsprofil des zweiten Transportelements wird zunächst sichergestellt, dass die beiden Bewegungsprofile hinsichtlich der Zeitachse identisch sind, also ggfs. hinsichtlich der Zeitachse angeglichen werden, um diese miteinander vergleichen zu können. Sodann wird das Bewegungsprofil des betrachteten ersten Transportelements mit dem Bewegungsprofil des voranfahrenden oder voraus befindlichen zweiten Transportelements verglichen und ein Verlauf der Differenz aus den Positionen der beiden Transportelemente über der Zeit ermittelt, um festzustellen, ob der vorbestimmte Mindestabstand zu irgendeinem Zeitpunkt unterschritten wird, wenn der Fahrauftrag ausgeführt wird. Der vorbestimmte Mindestabstand kann dabei insbesondere vom Betreiber der Transportsystems festgelegt werden. Wenn lediglich eine Kollision verhindert werden soll, kann dieser auch auf null reduziert werden.

Wird festgestellt, dass der Mindestabstand nicht unterschritten wird, kann das Transportelement seinen Fahrauftrag einfach ausführen. Wird hingegen festgestellt, dass der Mindestabstand unterschritten wird, wird das erste Bewegungsprofil nach der Maßgabe aktualisiert, dass der Mindestabstand gewahrt bleibt. Beispielsweise bietet es sich an, zu diesem Zweck die Geschwindigkeit des ersten Transportelements für den gesamten Fahrauftrag oder einen Teil des Fahrauftrags zu reduzieren.

Schließlich werden die Linearmotoren angesteuert, um den Fahrauftrag gemäß dem ggfs. aktualisierten ersten Bewegungsprofil auszuführen.

Somit kann bereits vor dem Losfahren des ersten Transportelements erkannt werden, ob eine Kollision mit dem vorausfahrenden Transportelement oder eine Unterschreitung des Mindestabstands zu erwarten ist. Die Bewegung des Transportelements wird also prädiktiv betrachtet, anstatt zyklisch wiederholt eine näherungsweise Abschätzung während des Fahrauftrags berechnen zu müssen. Die Erfindung leistet zudem, dass die Unterschreitung von Mindestabständen dezentral betrachtet wird, wobei immer nur ein Transportelement mit dem jeweiligen vorausfahrenden Transportelement zusammen betrachtet wird. Dies vereinfacht die Betrachtung des Gesamtsystems erheblich gegenüber einer zentralen Betrachtung des gesamten Systems.

Jeder Linearmotor kann insbesondere sechs Außenflächen aufweisen, nämlich Oberseite, Unterseite, Außenseite, Innenseite und zwei Seitenflächen. Dabei sind die Seitenflächen von benachbarten Linearmotoren durch einen geringen Dehnungsspalt von etwa 0,1 mm bis 0,2 mm zueinander beabstandet oder liegen direkt aneinander an. An der Außenseite kann die Führungsbahn für die Transportelemente ausgebildet sein. Die Innenseite ist im Bereich eines Innenraums des Transportsystems angeordnet.

Das Transportsystem bzw. das Multi-Carrier-System kann umlaufend ausgebildet sein, sodass die Linearmotoren eine in sich geschlossene Führungsbahn bilden, entlang der das Transportelement oder die Transportelemente theoretisch endlos in derselben Richtung bewegt werden können. Allerdings ist es auch möglich, dass die Linearmotoren eine offene Führungsbahn mit einem Startpunkt und einem Endpunkt bilden. Entlang der Führungsbahn können mehrere Stationen angeordnet sein, die aber in der Regel nur virtuell existieren und beispielsweise durch eine Koordinate der Führungsbahn definiert sind. Derartige Stationen sind mögliche Start- und Zielpunkte für Transportelemente. Beispielsweise kann ein Transportelement einen Fahrauftrag erhalten, der ihn von einer Station zu einer anderen Station fahren lässt, was einem Teilabschnitt der Führungsbahn entspricht. An den Stationen können außerdem Aktionen ausgeführt werden, wie zum Beispiel das Koppeln oder Entkoppeln einer bestimmten Anzahl von aufeinanderfolgenden Transportelementen oder das Warten eines Transportelements, bis sich eine bestimmte Anzahl von Transportelementen in der Station bzw. in der Warteschlange dieser Station befindet.

Die Transportelemente werden insbesondere magnetisch angetrieben. Dazu weisen die Transportelemente einen oder mehrere Permanentmagnete auf, welche mittels eines sich verändernden und/oder wandernden Magnetfelds, welches von den Linearmotoren erzeugt wird, mit einer Antriebskraft beaufschlagt werden. Die Antriebskraft führt zu einer Bewegung der Transportelemente entlang der Führungsbahn. Insbesondere können die Transportelemente unabhängig und separat voneinander bewegt werden. Mittels der Transportelemente können dadurch beispielsweise Werkstücke oder Produkte entlang der Führungsbahn transportiert werden.

Um die Transportelemente auf der Führungsbahn zu halten, werden diese bevorzugt mittels einer Anziehungskraft in einer zu einer Bewegungsrichtung des Transportelements senkrechten Richtung zu der Führungsbahn hingezogen. Somit verläuft die Anziehungskraft auch senkrecht zu der Antriebskraft. Die Anziehungskraft verläuft bevorzugt von der Führungsbahn hin zu den Linearmotoren bzw. zu den Spulen des Linearmotors. Die Anziehungskraft wird üblicherweise dadurch erzeugt, dass der Magnet des Transportelements von einem magnetisch leitfähigen Stator des jeweiligen Linearmotors angezogen wird.

Das Transportelement kann auch als Carrier, Mover oder Läufer, der Linearmotor hingegen auch als Stator bezeichnet werden.

Vorzugsweise wird das erste Bewegungsprofil neu erzeugt, wenn festgestellt wird, dass ein Erzeugungsereignis eingetreten ist. Das Neuerzeugen des Bewegungsprofils kann insbesondere auch stattfinden, nachdem das erste Transportelement bereits losgefahren ist, um den Fahrauftrag auszuführen. Beim Neuerzeugen des ersten Bewegungsprofils werden die zuvor erwähnten Schritte wiederholt, das heißt das derzeit aktive erste Bewegungsprofil wird gegen das derzeit aktive zweite Bewegungsprofil, welches sich möglicherweise geändert hat, abgeglichen. Wird eine Unterschreitung des Mindestabstands erkannt, wird das erste Bewegungsprofil erneut aktualisiert.

Als Erzeugungsereignis kann dabei grundsätzlich jedes Ereignis dienen, welches sich auf den Abstand zwischen dem ersten Transportelement und dem zweiten Transportelement auswirken kann. Insbesondere kann das Erzeugungsereignis eine Änderung des Rucks des zweiten Transportelements sein. Wird ein Ruck des zweiten Transportelements festgestellt, kann dieser auf ein Abbremsen des zweiten Transportelements hindeuten, wodurch sich der Abstand zwischen den beiden Transportelementen verringern würde. Dementsprechend ist bei Änderung des Rucks eine Überprüfung nötig, ob der Mindestabstand weiter eingehalten wird. Wenn die Ruckänderung des voranfahrenden Transportelements als Erzeugungsereignis gewählt wird, führt dies dazu, dass eine Änderung der Geschwindigkeit äußerst schnell erkannt wird und das Bewegungsprofil des nachfolgenden Transportelements nahezu in Echtzeit neu erzeugt werden kann.

Bei Eintreten des Erzeugungsereignisses kann außerdem ein drittes Bewegungsprofil eines dritten Transportelements unmittelbar hinter dem ersten Transportelement aktualisiert werden, sodass auch kein Auffahren des dritten Transportelements auf das erste Transportelement stattfindet. Entsprechend kann sich dies auf eventuelle weitere nachfolgende Transportelemente auswirken.

In vorteilhafter Ausgestaltung umfasst der Abgleich des ersten Bewegungsprofils mit dem zweiten Bewegungsprofil, dass eine Abstandstrajektorie eines Abstands zwischen dem ersten Transportelement und dem zweiten Transportelement berechnet wird. Die Abstandstrajektorie entspricht der Differenz aus den Positionen der beiden Transportelemente als Verlauf über der Zeitachse. Somit kann festgestellt werden, wann und ob der vorbestimmte Mindestabstand unterschritten wird, wenn der Fahrauftrag ausgeführt wird.

Beim Aktualisieren des ersten Bewegungsprofils kann die Geschwindigkeit des ersten Transportelements auf die Geschwindigkeit des zweiten Transportelements oder weniger reduziert werden. Dies kann insbesondere ab dem Zeitpunkt geschehen, zu dem sich das erste Transportelement bis auf den Mindestabstand dem zweiten Transportelement nähert. Ab diesem Zeitpunkt fährt das erste Transportelement also bei gleicher Geschwindigkeit hinter dem zweiten Transportelement her, sodass der Mindestabstand gewahrt bleibt.

Die Bewegungskennwerte können eine maximale Geschwindigkeit, eine maximale Beschleunigung und/oder einen Betrag des Rucks umfassen und ermöglichen somit gleichermaßen das Vorgeben der Rahmenbedingungen oder der idealerweise erzielten Werte, solange keine Unterschreitung des Mindestabstands in Betracht kommt.

Das Erzeugen und/oder Aktualisieren des Bewegungsprofils umfasst insbesondere das Ermitteln von Zeitabschnitten mit konstantem Ruck sowie das Berechnen einer maximalen tatsächlichen Beschleunigung und einer maximalen tatsächlichen Geschwindigkeit. Insbesondere kann aus dem vorgegebenen Betrag des Rucks die Zeitdauer ermittelt werden, über die dieser Ruck anliegt. Außerdem können daraus durch Integration der Verlauf der Beschleunigung, der Geschwindigkeit und der Position ermittelt werden.

Beispielsweise kann die Wegstrecke eines Fahrauftrags zunächst in einen Beschleunigungsabschnitt, einen Abschnitt mit konstanter Geschwindigkeit und einen Verzögerungsabschnitt unterteilt werden. Der Beschleunigungsabschnitt kann dann ebenso wie der Verzögerungsabschnitt wiederum in einen Abschnitt mit konstantem positivem Ruck und einen Abschnitt mit konstantem negativem Ruck unterteilt werden. So ergeben sich für den Fahrauftrag mehrere Zeitabschnitte mit konstantem Ruck, deren jeweilige Dauer sich aufgrund des Fahrauftrags und der Bewegungskennwerte ermitteln lässt.

Das erfindungsgemäße Transportsystem ist insbesondere ein Multi-Carrier-System und umfasst mehrere Linearmotoren, welche aneinandergereiht angeordnet sind und eine Führungsbahn aufweisen, und mehrere Transportelemente, welche mittels der Linearmotoren entlang der Führungsbahn bewegbar sind. Das Transportsystem ist außerdem mit einer Steuereinheit versehen, die dazu ausgebildet ist, das zuvor beschriebene Verfahren auszuführen.

Im Übrigen gelten zu dem erfindungsgemäßen Transportsystem die zum erfindungsgemäßen Verfahren getroffenen Aussagen entsprechend.

Nachfolgend wird die Erfindung schematisch und beispielhaft unter Bezugnahme auf die Zeichnungen beschrieben. Darin zeigt:
- Fig. 1: eine Draufsicht auf ein als Multi-Carrier-System ausgebildetes Transportsystem gemäß einem Ausführungsbeispiel,
- Fig. 2: eine Darstellung eines beispielhaften Bewegungsverlaufs für ein Transportelement,
- Fig. 3: eine Darstellung von zwei überlagerten Bewegungsverläufen zweier aufeinander folgender Transportelemente sowie eine dazugehörige Abstandstrajektorie und
- Fig. 4: eine Darstellung gemäß Fig. 3, wobei das Bewegungsprofil des nachfolgenden Transportelements aktualisiert worden ist.

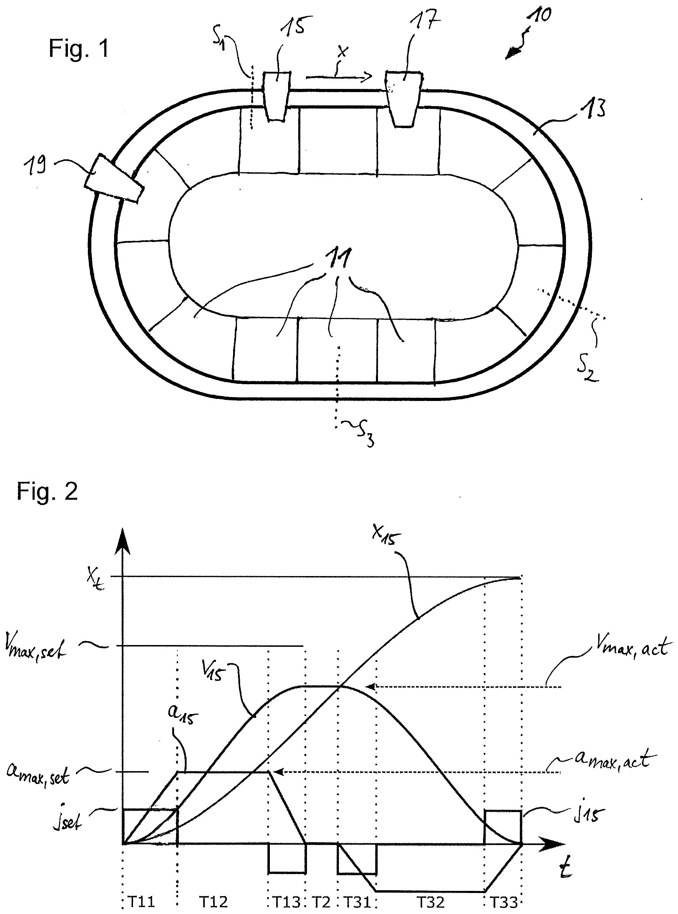

Fig. 1 zeigt schematisch ein als Multi-Carrier-System ausgebildetes Transportsystem 10 in Draufsicht, das eine Vielzahl von Linearmotoren 11 aufweist, welche im vorliegenden Ausführungsbeispiel in sich geschlossen aneinandergereiht angeordnet sind und eine geschlossene Führungsbahn 13 für Transportelemente 15, 17, 19 ausbilden. Zur anschaulichen Beschreibung sind in Fig. 1 nur drei Transportelemente 15, 17, 19 dargestellt, nämlich ein erstes Transportelement 15, ein zweites Transportelement 17, das sich in Bewegungsrichtung x unmittelbar vor dem ersten Transportelement 15 befindet, und ein drittes Transportelement 19, das sich in Bewegungsrichtung x unmittelbar hinter dem ersten Transportelement 15 befindet. "Unmittelbar" ist dabei nicht so zu verstehen, dass sich dies auf einen bestimmten Abstand zwischen den jeweiligen Transportelementen 15, 17, 19 bezieht, sondern bedeutet vielmehr, dass sich zwischen unmittelbar aufeinander folgenden Transportelementen 15, 17, 19 kein weiteres Transportelement befindet.

Die Transportelemente 15, 17, 19 werden durch die Linearmotoren 11 magnetisch angetrieben. Dazu weisen die Transportelemente 15, 17, 19 einen oder mehrere nicht dargestellte Permanentmagnete auf, welche mittels eines sich verändernden und/oder wandernden Magnetfelds, welches von den Linearmotoren 11 erzeugt wird, mit einer Antriebskraft beaufschlagt werden. Die Antriebskraft führt zu einer Bewegung der Transportelemente 15, 17, 19 entlang der Führungsbahn 13. Insbesondere können die Transportelemente 15, 17, 19 unabhängig und separat voneinander bewegt werden. Die Linearmotoren 11 werden von einer nicht dargestellten Steuereinheit angesteuert, um die jeweiligen Transportelemente 15, 17, 19 anzutreiben.

Wie Fig. 1 zu entnehmen ist, können entlang der Führungsbahn 13 mehrere, insbesondere virtuelle, Stationen S₁, S₂, S₃ angeordnet sein, die beispielsweise durch ihre Position in der Bewegungsrichtung x entlang der Führungsbahn 13 definiert sein können. An den Stationen können beispielsweise Transportelemente 15, 17, 19 zusammengefasst oder wieder vereinzelt werden oder ein Produkt zum Transport aufnehmen oder wieder abliefern. Beispielsweise können die Transportelemente 15, 17, 19 von der Steuereinheit eine Anweisung erhalten, die das jeweilige Transportelement von Station S₁ zu Station S₂ fahren lässt. Derartige Anweisungen werden auch als Fahrauftrag bezeichnet.

Wie Fig. 1 zeigt, bewegen sich das erste Transportelement 15 und das zweite Transportelement 17 zwischen Station S₁ und Station S₂, wobei das zweite Transportelement 17 voranfährt.

Fig. 2 zeigt eine Darstellung eines beispielhaften Bewegungsverlaufs für das erste Transportelement 15, bei dem eine Bewegung von einer Startposition, beispielsweise einer Station, zu einer Zielposition xt, die ebenfalls eine Station sein kann, betrachtet wird. Der Positionsverlauf x₁₅ des ersten Transportelements 15 ist darin über einer Zeitachse dargestellt, beginnt im Koordinatenursprung und endet an der Zielposition xt. Diese Bewegung untergliedert sich zunächst in eine Beschleunigungsphase, in der die Geschwindigkeit v₁₅ bis auf eine maximale tatsächliche Geschwindigkeit v_{max,act} erhöht wird, eine darauf folgende Phase von konstanter Geschwindigkeit und in eine Verzögerungsphase, in der die Geschwindigkeit v₁₅ bis zum Stillstand in der Zielposition xt reduziert wird. Die Beschleunigungsphase umfasst einen Abschnitt mit linear ansteigender Beschleunigung a₁₅, einen darauf folgenden Abschnitt mit konstanter positiver Beschleunigung a₁₅, wobei die konstante Beschleunigung a₁₅ in diesem Abschnitt einer maximalen tatsächlichen Beschleunigung a_{max,act} entspricht, und einen Abschnitt mit linear geringer werdender Beschleunigung a₁₅, bis die Beschleunigung a₁₅ auf null reduziert ist, die Geschwindigkeit v₁₅ also konstant gehalten wird. Entsprechend umfasst die Verzögerungsphase einen Abschnitt mit linear ansteigender Verzögerung a₁₅, einen darauf folgenden Abschnitt mit konstanter negativer Beschleunigung a₁₅ (Verzögerung) und einen Abschnitt mit linear geringer werdender Verzögerung a₁₅.

Der Verlauf des Rucks j₁₅ als Zeitableitung der Beschleunigung a₁₅ ist in Fig. 2 ebenfalls dargestellt. Wie Fig. 2 zeigt, ändert sich dieser mehrfach sprunghaft, nämlich an Stellen, an denen der Verlauf der Beschleunigung a₁₅ unstetig ist, und bleibt dann bis zur nächsten Unstetigkeit der Beschleunigung a₁₅ konstant. Wie gezeigt, ist die Beschleunigungsphase in drei Zeitabschnitte T11, T12, T13 von jeweils konstantem Ruck j₁₅ unterteilt. Ebenso ist die Verzögerungsphase in drei Zeitabschnitte T31, T32, T33 von jeweils konstantem Ruck j₁₅ unterteilt. Die Phase von konstanter Geschwindigkeit dazwischen entspricht einem Zeitabschnitt T2, in dem der Ruck j₁₅ unverändert bleibt.

In Fig. 2 sind außerdem eine maximale Geschwindigkeit v_{max,set}, eine maximale Beschleunigung a_{max,set} und ein Betrag des Rucks jₛₑₜ dargestellt. Diese Werte sind im vorliegenden Ausführungsbeispiel vorbestimmte Bewegungskennwerte, welcher der Betreiber oder Bediener des Transportsystems vorgeben kann. Dabei ist es auch denkbar, dass diese nicht einheitlich für eine gesamte Strecke vorgegeben werden, sondern für bestimmte Abschnitte der Strecke. So kann es etwa geboten sein, die Geschwindigkeit eines Transportelements in einem Kurvenbereich der Führungsbahn zu verringern, um zu vermeiden, dass das Transportelement von der Führungsbahn abkommt oder die beförderte Last verliert.

Wenn für das erste Transportelement 15 ein Fahrauftrag erstellt wird, sieht das Verfahren zunächst vor, ein Bewegungsprofil des ersten Transportelements 15 für den Fahrauftrag zu erzeugen. Im vorliegenden Ausführungsbeispiel geschieht dies basierend auf der maximalen Geschwindigkeit v_{max,set}, der maximalen Beschleunigung a_{max,set}, dem Betrag des Rucks jₛₑₜ und der Zielposition xt als vorbestimmten Bewegungskennwerten. Insbesondere ist Teil des Bewegungsprofils der Verlauf der Position x₁₅ über der Zeit. Wie Fig. 2 zeigt, ist die maximal tatsächlich erreichte Geschwindigkeit v_{max,act} im vorliegenden Beispiel kleiner als der entsprechende vorgegebene Maximalwert, was etwa vorkommen kann, wenn die abzufahrende Strecke nicht ausreicht, um auf die maximale Geschwindigkeit v_{max,set} zu beschleunigen. In diesem Beispiel ist die maximal tatsächlich erreichte Beschleunigung amax,act gleich der maximalen vorgegebenen Beschleunigung amax,set.

Zudem werden die zuvor beschriebenen Zeitabschnitte T11, T12, ..., T33 mit konstantem Ruck aus den vorbestimmten Bewegungskennwerten ermittelt sowie gegebenenfalls eine maximale tatsächlichen Beschleunigung a_{max,act} und eine maximale tatsächliche Geschwindigkeit v_{max,act} berechnet.

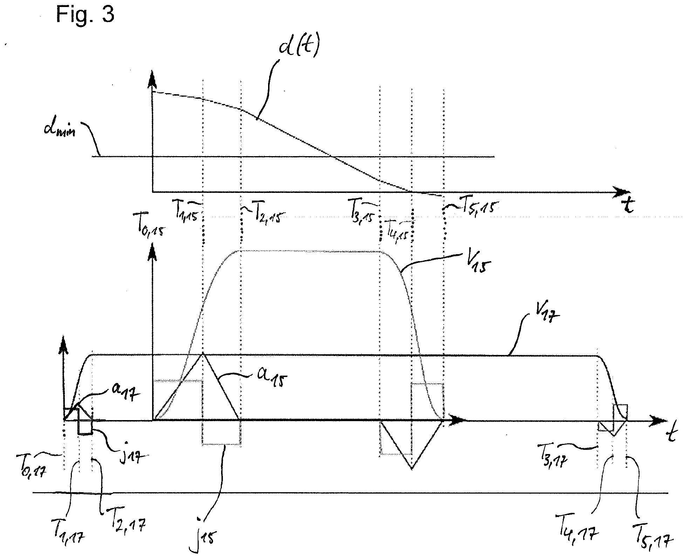

Fig. 3 zeigt im unteren Diagramm, dass zwei Bewegungsverläufe zweier aufeinander folgender Transportelemente 15, 17 überlagert sind, wobei jeweils die Geschwindigkeit v₁₅, v₁₇, die Beschleunigung a₁₅, a₁₇ und der Ruck j₁₅, j₁₇ der beiden Transportelemente 15, 17 als Verlauf über der Zeitachse dargestellt sind. Die Positionen der beiden Transportelemente 15, 17 sind nicht separat gezeigt, jedoch zeigt das obere Diagramm in Fig. 3 eine Abstandstrajektorie d(t), die dem zeitlichen Verlauf des Abstands zwischen den beiden Transportelementen 15, 17 entspricht, also der Differenz der Positionsverläufe.

Fig. 3 veranschaulicht ein Beispiel, in dem zunächst das zweite Transportelement 17 zu einem Zeitpunkt T_{0,17} mit dem Abfahren eines Fahrauftrags beginnt. Zu einem Zeitpunkt T_{0,15} soll das erste Transportelement 15 ebenfalls mit dem Abfahren eines Fahrauftrags entlang desselben Teilabschnitts einer Führungsbahn 13 beginnen. Dementsprechend sind die beiden Bewegungsverläufe auf der Zeitachse versetzt dargestellt, also hinsichtlich der Zeitachse angepasst, um diese vergleichen zu können. Da zunächst das zweite Transportelement 17 losfährt, während sich das erste Transportelement 15 noch nicht auf dem Teilabschnitt bewegt, wird zunächst ein Abstand d(t) zwischen den Transportelementen 15, 17 aufgebaut, der jeweils zu den Zeitpunkten T_{0,15} ... T_{5,15} berechnet wird, wobei zwischen aufeinander folgenden Zeitpunkten ein linearer Verlauf des Abstands d(t) zugrunde gelegt wird. Fig. 3 zeigt jedoch, dass die Geschwindigkeit v₁₅ des nachfolgenden Transportelements 15 höher ist als die Geschwindigkeit v₁₇ des vorausfahrenden Transportelements 17, sodass sich der Abstand d(t) sukzessive verringert und zwischen den Zeitpunkten T_{2,15} und T_{3,15}, welche jeweils einen Zeitpunkt mit geändertem Ruck j₁₅ des ersten Transportelements 15 kennzeichnen, einen beispielsweise von einem Betreiber oder Bediener des Transportsystems 10 vorbestimmten Mindestabstand dₘᵢₙ unterschreiten würde. Aufgrund dieses Abgleichs wird somit ermittelt, dass bei Durchführung des Fahrauftrags des ersten Transportelements 15 der vorbestimmte Mindestabstand dₘᵢₙ zwischen den Transportelementen 15, 17 unterschritten würde.

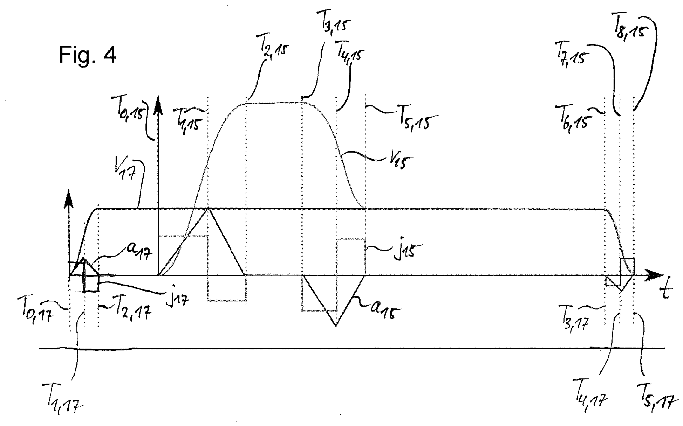

Das Bewegungsprofil des ersten Transportelements 15 für den Fahrauftrag muss dementsprechend zunächst angepasst werden. Dazu wird dieses derart aktualisiert, dass der Mindestabstand dₘᵢₙ während des Fahrauftrags des ersten Transportelements 15 gewahrt wird. Dies geschieht im vorliegenden Beispiel dadurch, dass die Geschwindigkeit v₁₅ des ersten Transportelements 15 auf die Geschwindigkeit v₁₇ des zweiten Transportelements 17 reduziert wird, wie Fig. 4 anschaulich zeigt. Wie oben festgestellt wurde, würde bei dem Bewegungsverlauf gemäß Fig. 3 zwischen den Zeitpunkten T_{2,15} und T_{3,15} der Mindestabstand dₘᵢₙ unterschritten werden. Entsprechend bleibt der Bewegungsablauf des nachfolgenden ersten Transportelements 15 in Fig. 4 vom Zeitpunkt T_{0,15} des Losfahrens bis zum Zeitpunkt T_{2,15} unverändert zu Fig. 3. Der Zeitpunkt T_{3,15}, in dem das erste Transportelement 15 verzögert und sich dementsprechend der Ruck j₁₅ verändert, ist in Fig. 4 gegenüber Fig. 3 vorgezogen, das heißt, die Bewegung des ersten Transportelements 15 wird früher verzögert. Zudem zeigt Fig. 4, dass nach einer Verzögerungsphase zwischen T_{3,15} und T_{5,15} die Geschwindigkeit v₁₅ des ersten Transportelements 15 der Geschwindigkeit v₁₇ des zweiten Transportelements 17 entspricht, sodass der Mindestabstand dₘᵢₙ nicht unterschritten wird.

Nachdem ein Unterschreiten des Mindestabstands dₘᵢₙ aufgrund des aktualisierten Bewegungsprofils vermieden wird, werden die Linearmotoren 11 durch die Steuereinheit angesteuert, um das erste Transportelement 15 entsprechend dem aktualisierten ersten Bewegungsprofil zu bewegen.

Somit wird eine eventuelle Unterschreitung des Mindestabstands dₘᵢₙ bereits vor Beginn des Fahrauftrags erkannt und das Bewegungsprofil des ersten Transportelements 15 angepasst, um die Unterschreitung zu vermeiden. Dadurch wird der Abstand zum vorausfahrenden Transportelement 17 nicht adaptiv, sondern prädiktiv gesteuert. Insbesondere werden dadurch auch Verzögerungen durch Reaktionszeiten vermieden. Vielmehr können aufeinander folgende Transportelemente gleichzeitig und gleich stark beschleunigen oder verzögern, sodass ein Ziehharmonikaeffekt vermieden wird. Eine zusätzliche Kollisionsprävention, beispielsweise im Sinne eines Abschaltens aller Transportelemente, ist obsolet.

Zusätzlich kann das Bewegungsprofil des ersten Transportelements 15 in gleicher Weise wie oben beschrieben neu erzeugt oder aktualisiert werden, wenn festgestellt wird, dass ein Erzeugungsereignis eingetreten ist. Es bietet sich beispielsweise an, als Erzeugungsereignis eine Änderung des Rucks j₁₇ des zweiten Transportelements 17 zu erfassen. Diese Änderung kann etwa auf ein Abbremsen des zweiten Transportelements 17 hindeuten. Zudem kann bei Eintritt des Erzeugungsereignisses ebenfalls ein Bewegungsprofil des dritten Transportelements 19 unmittelbar hinter dem ersten Transportelement 15 aktualisiert werden.

### Bezugszeichenliste

- 10: Transportsystem
- 11: Linearmotor
- 13: Führungsbahn
- 15: erstes Transportelement
- 17: zweites Transportelement
- 19: drittes Transportelement

- a₁₅: Beschleunigung des ersten Transportelements
- a₁₇: Beschleunigung des zweiten Transportelements
- amax,act: maximale tatsächliche Beschleunigung
- amax,set: maximale Beschleunigung
- d(t): Abstandstrajektorie
- dₘᵢₙ: Mindestabstand
- j₁₅: Ruck des ersten Transportelements
- j₁₇: Ruck des zweiten Transportelements
- jₛₑₜ: Betrag des Rucks
- S₁: Station
- S₂: Station
- S₃: Station
- T: Zeitabschnitt
- v₁₅: Geschwindigkeit des ersten Transportelements
- v₁₇: Geschwindigkeit des zweiten Transportelements
- v_{max,act}: maximale tatsächliche Geschwindigkeit
- v_{max,set}: maximale Geschwindigkeit
- x: Bewegungsrichtung
- x₁₅: Position des ersten Transportelements
- xt: Zielposition

## Patentansprüche

1. Verfahren zum Betreiben eines Transportsystems (10), insbesondere eines Multi-Carrier-Systems, das mehrere Linearmotoren (11), welche aneinandergereiht angeordnet sind und eine Führungsbahn (13) aufweisen, und mehrere Transportelemente (15, 17, 19) umfasst, welche mittels der Linearmotoren (11) entlang der Führungsbahn (13) bewegbar sind, wobei das Verfahren die folgenden Schritte aufweist:
- Erzeugen eines Fahrauftrags für ein erstes (15) der Transportelemente (15, 17, 19) zum Fahren entlang zumindest eines Teilabschnitts der Führungsbahn (13),
- Erzeugen eines ersten Bewegungsprofils des ersten Transportelements (15) für den Fahrauftrag basierend auf vorbestimmten Bewegungskennwerten,
- Abgleichen des ersten Bewegungsprofils mit einem zweiten Bewegungsprofil eines zweiten Transportelements (17) unmittelbar vor dem ersten Transportelement (15) und ermitteln, ob bei Durchführung des Fahrauftrags ein vorbestimmter Mindestabstand (dₘᵢₙ) zwischen dem ersten Transportelement (15) und dem zweiten Transportelement (17) unterschritten wird,
- Aktualisieren des ersten Bewegungsprofils, um den Mindestabstand (dₘᵢₙ) zu wahren, falls festgestellt wurde, dass der Mindestabstand (dₘᵢₙ) unterschritten wird, und
- Ansteuern der Linearmotoren (11), um das erste Transportelement (15) entsprechend dem ersten Bewegungsprofil zu bewegen.

2. Verfahren nach Anspruch 1,
**dadurch gekennzeichnet, dass** das erste Bewegungsprofil neu erzeugt wird, wenn festgestellt wird, dass ein Erzeugungsereignis eingetreten ist.

3. Verfahren nach Anspruch 2,
**dadurch gekennzeichnet, dass** das Erzeugungsereignis eine Änderung des Rucks (j₁₇) des zweiten Transportelements (17) ist.

4. Verfahren nach Anspruch 2 oder 3,
**dadurch gekennzeichnet, dass** bei Eintreten des Erzeugungsereignisses außerdem ein drittes Bewegungsprofil eines dritten Transportelements (19) unmittelbar hinter dem ersten Transportelement (15) aktualisiert wird.

5. Verfahren nach einem der vorstehenden Ansprüche,
**dadurch gekennzeichnet, dass** der Abgleich des ersten Bewegungsprofils mit dem zweiten Bewegungsprofil umfasst, dass eine Abstandstrajektorie (d(t)) eines Abstands zwischen dem ersten Transportelement (15) und dem zweiten Transportelement (17) berechnet wird.

6. Verfahren nach einem der vorstehenden Ansprüche,
**dadurch gekennzeichnet, dass** beim Aktualisieren des ersten Bewegungsprofils die Geschwindigkeit (v₁₅) des ersten Transportelements (15) auf die Geschwindigkeit (v₁₇) des zweiten Transportelements (17) oder weniger reduziert wird.

7. Verfahren nach einem der vorstehenden Ansprüche,
**dadurch gekennzeichnet, dass** die Bewegungskennwerte eine maximale Geschwindigkeit (vmax,set), eine maximale Beschleunigung (amax,set) und/oder einen Betrag des Rucks (jₛₑₜ) umfassen.

8. Verfahren nach einem der vorstehenden Ansprüche,
**dadurch gekennzeichnet, dass** das Erzeugen und/oder Aktualisieren des Bewegungsprofils das Ermitteln von Zeitabschnitten mit konstantem Ruck sowie das Berechnen einer maximalen tatsächlichen Beschleunigung (amax,act) und einer maximalen tatsächlichen Geschwindigkeit (vmax,act) umfasst.

9. Transportsystem (10), insbesondere Multi-Carrier-System, das mehrere Linearmotoren (11), welche aneinandergereiht angeordnet sind und eine Führungsbahn (13) aufweisen, und mehrere Transportelemente (15, 17, 19) umfasst, welche mittels der Linearmotoren (11) entlang der Führungsbahn (13) bewegbar sind,
**gekennzeichnet durch** eine Steuereinheit, die ausgebildet ist, das Verfahren nach einem der vorstehenden Ansprüche auszuführen.
